# EUROPEAN PATENT APPLICATION

(11) **EP 3 392 820 A1**
(43) Date of publication of application: **24.10.2018**
(21) Application number: 18168196.6
(22) Date of filing: 19.04.2018
(51) Int. Cl.: G06Q 30/02

(54) **SERVER DEVICE AND SERVICE METHOD**

(30) Priority: 20.04.2017 JP 2017083920
(71) Applicant: Toshiba TEC Kabushiki Kaisha, Tokyo 141-0032 (JP)
(72) Inventor: Suzuki, Shigeaki, Tokyo, 141-8562 (JP)
(74) Representative: Hoffmann Eitle

(57) **Abstract**

Provided are a server device and a service method which are capable of reducing a burden to a store related to detection of store visiting.

The server device includes a first reception unit configured to receive a customer identifier for identifying a customer from a customer terminal owned by the customer and an individual commodity identifier for identifying a commodity which is read by the customer terminal, a specification unit configured to specify a store identifier of a store that sells the commodity having the individual commodity identifier received by the first reception unit, on the basis of individual commodity management information in which an individual commodity identifier of each commodity and the store identifier of the store that sells the commodity are associated with each other, and a first transmission unit configured to transmit the customer identifier received by the first reception unit to the store corresponding to the store identifier specified by the specification unit, as a notice of store visiting.

## Description

### FIELD

Exemplary embodiments described herein relate to a server device and a service method.

### BACKGROUND

In recent years, in retail stores such as electronics retail stores, points (store visiting points) are provided to a customer visiting a store in order to promote customers' store visiting. In such stores, a store visiting detection device that reads identification information for identifying a customer from a card medium, a portable terminal, or the like owned by the customer is provided at an entrance or the like of the store. In the store, when the identification information is read through the store visiting detection device, it is determined that a customer corresponding to the identification information is visited the store.

However, in the related art related to the detection of store visiting, a store visiting detection device is installed inside a store, and thus an introduction cost or an operation cost of a reading device increases, which may cause a burden to the store. For this reason, there are demands for a technique for reducing a burden to a store related to the detection of store visiting.

### SUMMARY OF THE INVENTION

One of the objects of the present invention is to improve prior art techniques and overcome at least some of the prior art problems as for instance above illustrated.

According to a first aspect, it is provided a server device comprising: a first reception unit configured to receive a customer identifier for identifying a customer and an individual commodity identifier for identifying a commodity which is read by a customer terminal, from the customer terminal owned by the customer; a specification unit configured to specify a store identifier of a store that sells the commodity having the individual commodity identifier received by the first reception unit, on the basis of individual commodity management information in which an individual commodity identifier of each commodity and the store identifier of the store that sells the commodity are associated with each other; and a first transmission unit configured to transmitting the customer identifier received by the first reception unit to the store corresponding to the store identifier specified by the specification unit, as a notice of store visiting.

Optionally, the device according to the first aspect, further comprises a second reception unit configured to receive an individual commodity identifier of a commodity to be registered and a store identifier of a store that sells the commodity from the store; a registration unit configured to register the individual commodity identifier and the store identifier, which are received by the second reception unit, in the individual commodity management information in association with each other.

Optionally, the device according to the first aspect further comprises a third reception unit configured to receive an individual commodity identifier of a commodity which is a target for cancellation of registration; a registration cancellation unit configured to delete a set of the individual commodity identifier received by the third reception unit and a store identifier associated with the individual commodity identifier from the individual commodity management information.

Optionally, the device according to the first aspect further comprises a second transmission unit configured to transmit information on the commodity having the individual commodity identifier received by the first reception unit to the customer terminal.

Optionally, in the device according to the first aspect, the first transmission unit performs control such that the number of times of transmission of the same customer identifier with respect to the same store is set to one within a predetermined period of time.

According to a second aspect, it is provided a service method comprising: receiving a customer identifier for identifying a customer and an individual commodity identifier for identifying a commodity which is read by a customer terminal, from the customer terminal owned by the customer; specifying a store identifier of a store that sells the commodity having the received individual commodity identifier, on the basis of individual commodity management information in which an individual commodity identifier of each commodity and the store identifier of the store that sells the commodity are associated with each other; and transmitting the received customer identifier to the store corresponding to the specified store identifier, as a notice of store visiting.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram illustrating an example of a system configuration of a point system according to an embodiment.
FIG. 2 is a block diagram illustrating an example of a hardware configuration of a store terminal according to the embodiment.
FIG. 3 is a diagram illustrating an example of a data configuration of a commodity master table illustrated in FIG. 2.
FIG. 4 is a diagram illustrating an example of a data configuration of a point management table illustrated in FIG. 2.
FIG. 5 is a block diagram illustrating an example of a hardware configuration of a customer terminal according to the embodiment.
FIG. 6 is a block diagram illustrating an example of a hardware configuration of a management server according to the embodiment.
FIG. 7 is a diagram illustrating an example of a data structure of an individual commodity management table illustrated in FIG. 6.
FIG. 8 is a diagram illustrating an example of functional configurations of the store terminal, the customer terminal, and the management server according to the embodiment.
FIG. 9 is a flow chart illustrating an example of processing performed between the store terminal and the management server according to the embodiment.
FIG. 10 is a flow chart illustrating an example of processing performed between the store terminal and the management server according to the embodiment.
FIG. 11 is a flow chart illustrating an example of processing performed among the store terminal, the customer terminal, and the management server according to the embodiment.

### DETAILED DESCRIPTION

An exemplary embodiment provides a server device and a service method which are capable of reducing a burden to a store related to the detection of store visiting.

In general, according to one embodiment, a server device includes a first reception unit configured to receive a customer identifier for identifying a customer from a customer terminal owned by the customer and an individual commodity identifier for identifying a commodity which is read by the customer terminal, a specification unit configured to specify a store identifier of a store that sells the commodity having the individual commodity identifier received by the first reception unit, on the basis of individual commodity management information in which an individual commodity identifier of each commodity and the store identifier of the store that sells the commodity are associated with each other, and first transmission unit for transmitting the customer identifier received by the first reception unit to the store corresponding to the store identifier specified by the specification unit, as a notice of store visiting.

Hereinafter, a server device and a service method according to an embodiment will be described with reference to the accompanying drawings. In the embodiment described below, an example of application to a point system introduced to a retail store (store) such as an electronics retail store, but is not limited to the embodiment.

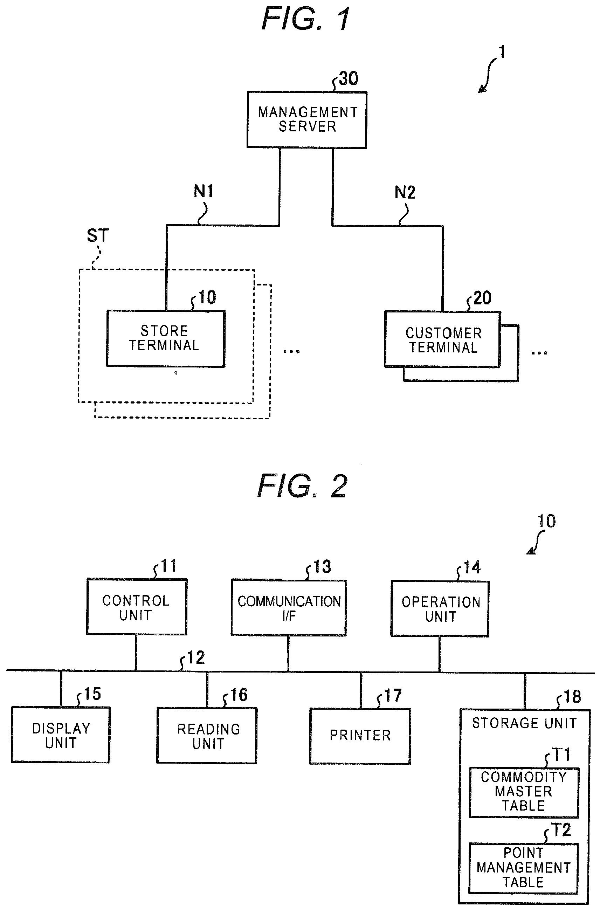

FIG. 1 is a diagram illustrating an example of a system configuration of a point system 1 according to the embodiment. As illustrated in FIG. 1, the point system 1 includes a store terminal 10, a customer terminal 20, and a management server 30.

The store terminal 10 and the management server 30 are communicably connected to each other through a network N1 such as the Internet. In addition, the customer terminal 20 and the management server 30 are communicably connected to each other through a network N2 such as a mobile communication network. Meanwhile, the network N1 and the network N2 may be the same network.

The store terminal 10 is an information processing device, such as a Point Of Sales (POS) terminal, which is installed in each store ST. The store terminal 10 performs a settlement process for a commodity purchased by a customer, the provision of points to the customer, and the like in accordance with an operator's operation. Meanwhile, the number of store terminals 10 (stores ST) connected to the network N1 does not particularly matter, and is not limited to the example of FIG. 1.

FIG. 2 is a block diagram illustrating an example of a hardware configuration of the store terminal 10. As illustrated in FIG. 2, the store terminal 10 includes a control unit 11 having a computer configuration constituted by a Central Processing Unit (CPU), a Read Only Memory (ROM), a Random Access Memory (RAM), and the like. A communication I/F 13 is connected to the control unit 11 through a bus 12. The communication I/F 13 is configured to be capable of communicating with the management server 30 connected to the network N1.

In addition, an operation unit 14 and a display unit 15 are connected to the control unit 11 through the bus 12. The operation unit 14 includes a closing key for instructing the termination of a transaction in addition to numerical keys, alphabetic keys, and cursor keys. The display unit 15 includes a display device such as a liquid crystal display, and displays various screens under the control of the control unit 11.

In addition, a reading unit 16 and a printer 17 are connected to the control unit 11 through the bus 12. The reading unit 16 is a reading device for reading attached information attached to a commodity. For example, the reading unit 16 is a reader-writer device capable of reading an IC tag, a code scanner that reads a code symbol such as a two-dimensional code, or the like. The printer 17 is a printer that prints a receipt and the like under the control of the control unit 11.

In addition, a storage unit 18 is connected to the control unit 11 through the bus 12. The storage unit 18 is a storage device such as a Hard Disk Drive (HDD) or a Solid State Drive (SSD). The storage unit 18 stores various programs executed by the control unit 11 (CPU), or setting information. In addition, the storage unit 18 stores a commodity master table T1 storing the price of a commodity, and the like in association with a commodity code for identifying the type of commodity.

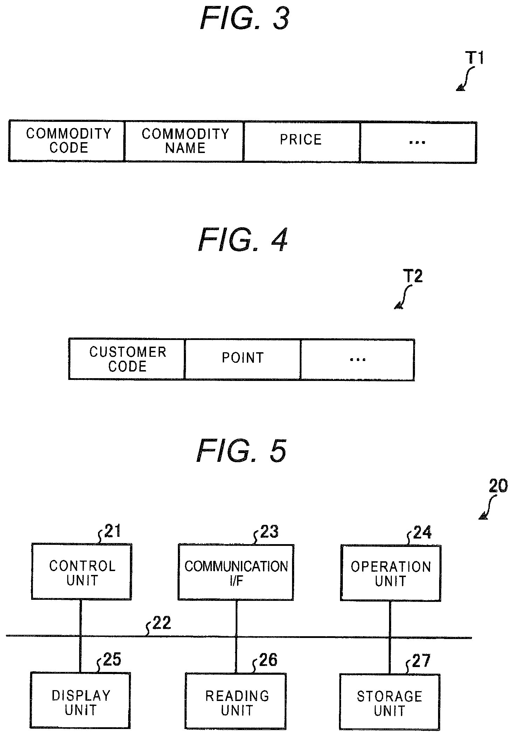

FIG. 3 is a diagram illustrating an example of a data configuration of the commodity master table T1. As illustrated in FIG. 3, the commodity master table T1 stores a commodity name, price, and the like of a commodity sold in the store ST, in association with a commodity code of the commodity. Meanwhile, a data structure of the commodity master table T1 is not limited to the example of FIG. 3.

In addition, the storage unit 18 stores a point management table T2 in which points provided to a customer (member) registered as a member are stored in association with a customer code for identifying the customer. Here, the points are one of services to be provided to customers by the store ST in order to achieve the promotion of customers' store visiting or purchase. In the store ST, predetermined points are provided on a condition that a customer visits the store, or points based on a purchase amount are provided. In the store ST, service such as a discount is provided to a customer in accordance with points.

FIG. 4 is a diagram illustrating an example of a data configuration of the point management table T2. As illustrated in FIG. 4, the point management table T2 stores a cumulative value of points provided to a customer previously registered as a member, in association with a customer code of the customer. Meanwhile, a data structure of the point management table T2 is not limited to the example of FIG. 4. For example, the point management table T2 may store the name, age, and sex of the customer, address information indicating an access destination to the customer terminal 20 owned by the customer, and the like in association with the customer code.

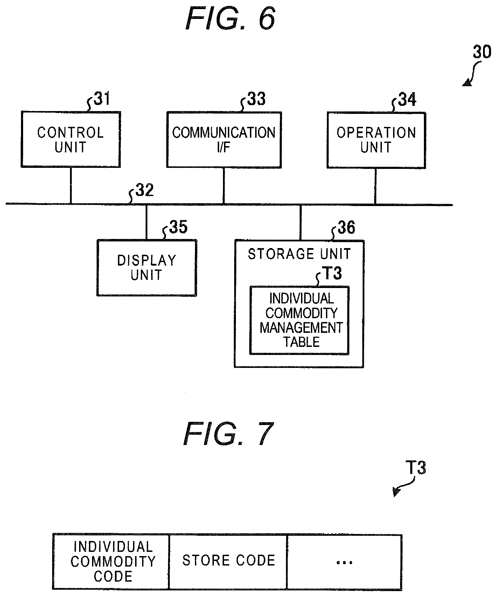

The control unit 11 executes programs stored in the ROM or the storage unit 18 to generally control the operation of the store terminal 10. For example, the control unit 11 executes a preliminary registration process of registering an individual commodity code of a commodity sold in the store ST and a store code for identifying the store ST in an individual commodity management table T3 (see FIG. 7) to be described later in association with each other.

Here, it is assumed that attached information including a commodity code (for example, a Japan Article Number (JAN) code) for identifying the type of commodity and an individual commodity code for identifying each commodity are attached to a commodity sold in the store ST of the store terminal 10. The attached information is attached to the corresponding commodity, for example, in the form of an IC tag, a two-dimensional code, or the like. Meanwhile, the attached information is not limited to the commodity code and the individual commodity code, and may hold another information. For example, the attached information may hold address information such as a Uniform Resource Identifier (URI) indicating an access destination of the management server 30. In addition, a configuration in which a portion of the individual commodity code includes a commodity code may also be adopted.

Referring back to FIG. 1, the customer terminal 20 is a portable information communication terminal, such as a smart phone or a tablet terminal, which is owned by a customer. Meanwhile, the number of customer terminals 20 connected to the network N2 does not particularly matter, and is not limited to the example of FIG. 1.

FIG. 5 is a block diagram illustrating an example of a hardware configuration of the customer terminal 20. As illustrated in FIG. 5, the customer terminal 20 includes a control unit 21 having a computer configuration constituted by a CPU, a ROM, a RAM, and the like. A communication I/F 23 is connected to the control unit 21 through a bus 22. The communication I/F 23 is configured to be capable of communicating with the management server 30 connected to the network N2.

In addition, an operation unit 24 and a display unit 25 are connected to the control unit 21 through the bus 22. The operation unit 24 includes a keyboard and the like. The display unit 25 includes a display device such as a liquid crystal display, and displays various screens under the control of the control unit 21. Meanwhile, the display unit 25 may be configured as a touch panel. In this case, the touch panel functions as the operation unit 24.

In addition, a reading unit 26 is connected to the control unit 21 through the bus 22. The reading unit 26 is a reading device for reading attached information attached to a commodity. For example, the reading unit 26 is a reader-writer device capable of reading an IC tag, a camera capable of reading a code symbol such as a two-dimensional code, or the like.

In addition, a storage unit 27 is connected to the control unit 21 through the bus 22. The storage unit 27 is a storage device such as an HDD or an SSD. The storage unit 27 stores various programs executed by the control unit 21 (CPU), or various pieces of setting information. In addition, the storage unit 27 stores a customer code of a customer owning the customer terminal 20.

Referring back to FIG. 1, the management server 30 is an example of a server device. The management server 30 is installed at, for example, a data center of a company running the store ST, an organization as a third party, or the lie. Meanwhile, in this embodiment, it is assumed that the management server 30 is realized by one server device, but is not limited thereto. The management server may be realized as a cloud server by cooperation of a plurality of server devices.

FIG. 6 is a block diagram illustrating an example of a hardware configuration of the management server 30. As illustrated in FIG. 6, the management server 30 includes a control unit 31 having a computer configuration constituted by a CPU, a ROM, a RAM, and the like. A communication I/F 33 is connected to the control unit 31 through a bus 32. The communication I/F 33 is configured to be capable of communicating with the store terminal 10 connected to the network N1. In addition, the communication I/F 33 is configured to be capable of communicating with the customer terminal 20 connected to the network N2.

In addition, an operation unit 34 and a display unit 35 are connected to the control unit 31 through the bus 32. The operation unit 34 includes a keyboard and the like. The display unit 35 includes a display device such as a liquid crystal display, and displays various screens under the control of the control unit 31.

In addition, a storage unit 36 is connected to the control unit 31 through the bus 32. The storage unit 36 is a storage device such as an HDD or an SSD. The storage unit 36 stores various programs executed by the control unit 31 (CPU), or various pieces of setting information. In addition, the storage unit 36 stores the individual commodity management table T3 in which an individual commodity code of each commodity and a store code of the store ST that sells the commodity having the individual commodity code are associated with each other.

FIG. 7 is a diagram illustrating an example of a data structure of the individual commodity management table T3. As illustrated in FIG. 7, the individual commodity management table T3 stores an individual commodity code and a store code in association with each other. Meanwhile, the data structure of the individual commodity management table T3 is not limited to the example of FIG. 7. For example, the individual commodity management table T3 may store a commodity code and the like of the corresponding commodity in association with the individual commodity code.

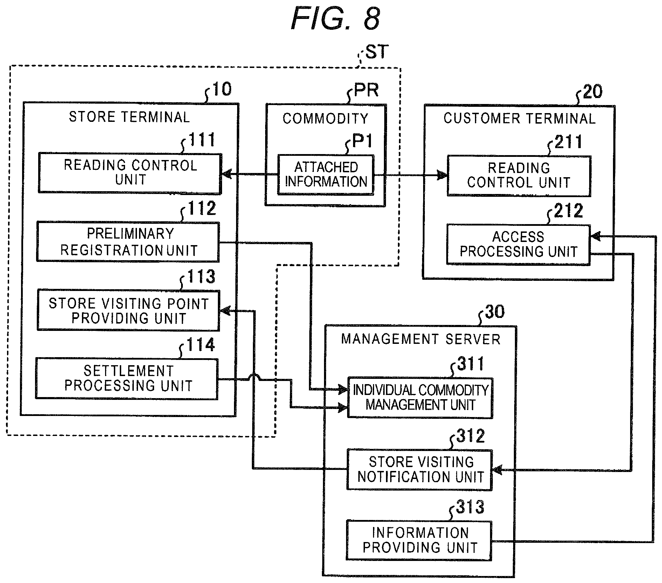

Next, functional configurations of the store terminal 10, the customer terminal 20, and the management server 30 will be described with reference to FIG. 8. FIG. 8 is a diagram illustrating an example of the functional configurations of the store terminal 10, the customer terminal 20, and the management server 30. Meanwhile, a commodity PR sold in the store ST of the store terminal 10 is related to the functional units of the store terminal 10 and the customer terminal 20, and thus is not shown in the drawing for convenience of description.

First, the functional configuration of the store terminal 10 will be described. The control unit 11 of the store terminal 10 executes programs stored in the ROM or the storage unit 18 to realize a reading control unit 111, a preliminary registration unit 112, a store visiting point providing unit 113, and a settlement processing unit 114 as functional units as illustrated in FIG. 8.

The reading control unit 111 controls the reading unit 16 to read attached information P1 attached to the commodity PR.

The preliminary registration unit 112 executes processing for registering an individual commodity code of the commodity PR sold in the store ST in the individual commodity management table T3 in association with a store code of the store ST. Specifically, the preliminary registration unit 112 extracts the individual commodity code from the attached information P1 which is read under the control of the reading control unit 111 when an instruction for starting preliminary registration is given through the operation unit 14 or the like. The preliminary registration unit 112 generates registration information including the extracted individual commodity code and the store code of the store ST and transmits the generated registration information to the management server 30. Thereby, a set of the individual commodity code and the store code which are included in the registration information is registered in the individual commodity management table T3 by an individual commodity management unit 311 to be described later.

Meanwhile, the preliminary registration unit 112 may extract the commodity code from the attached information P1 to generate the registration information including the commodity code together with the individual commodity code. In addition, the preliminary registration unit 112 may generate the registration information for each attached information P1. In addition, the preliminary registration unit 112 may generate registration information including a plurality of individual commodity codes.

The store visiting point providing unit 113 provides predetermined points (store visiting points) to a customer when a notice of the customer's store visiting is given from the management server 30. Specifically, when the store visiting point providing unit 113 receives a customer code from the management server 30 as the notice of store visiting, the store visiting point providing unit retrieves data corresponding to the customer code from the point management table T2 to specify the customer who visits the store. The store visiting point providing unit 113 performs the provision of store visiting points by adding the store visiting points to a point value (cumulative value) of the customer specified from the point management table T2.

The settlement processing unit 114 executes a settlement process related to the settlement of the commodity PR. Specifically, the settlement processing unit 114 specifies the commodity PR corresponding to the commodity code included in the attached information P1 from the commodity master table T1 when the attached information P1 is read from the commodity PR by the reading unit 16. The settlement processing unit 114 reads out the price and the like of the specified commodity PR from the commodity master table T1 and registers the read-out price and the like as sales data. Here, the registration of the sales data means that the information regarding the commodity PR which is read out from the commodity master table T1 is held in the RAM in association with the number of commodities PR purchased, the individual commodity code, and the like.

In addition, the settlement processing unit 114 executes a settlement process on the basis of sales data registered during a transaction when an instruction for terminating the transaction is given through the operation of the closing key or the like. Specifically, the settlement processing unit 114 multiplies the price of the commodity PR and the number of commodities PR purchased which are included in the sales data to calculate an amount of money related to the settlement of the commodities PR. In addition, the settlement processing unit 114 sums up amounts of money calculated for respective pieces of sales data to calculate the summed amount (hereinafter, referred to as a total commodity amount) of all of the commodities PR registered in one transaction. The settlement processing unit 114 executes a settlement process of performing settlement for the calculated total commodity amount by means of cash or the like.

Meanwhile, in a case where points (normal points) based on a purchase amount are provided to a customer, the settlement processing unit 114 performs the provision of points by adding the normal points calculated on the basis of a total commodity amount to a point value (cumulative value) of the corresponding customer. In this case, a customer code of the customer to be provided with the normal points may be input through the reading unit 16 or may be input by another method.

In addition, when the settlement process is completed, the settlement processing unit 114 notifies the management server 30 of the individual commodity code of the commodity PR registered in the transaction to apply for the cancellation of registration from the individual commodity management table T3. Specifically, when the settlement process is completed, the settlement processing unit 114 extracts the individual commodity code from sales data registered during the transaction. The settlement processing unit 114 generates registration cancellation information including the extracted individual commodity code, and transmits the generated registration cancellation information to the management server 30. Thereby, a data entry corresponding to the individual commodity code included in the registration cancellation information is canceled (deleted) from the individual commodity management table T3 by the individual commodity management unit 311 to be described later. Meanwhile, the settlement processing unit 114 may transmit the registration cancellation information inclusive of the store code of the store ST. In addition, the settlement processing unit 114 may transmit the registration cancellation information for each individual commodity code, or may transmit the registration cancellation information including a plurality of individual commodity codes at once.

Next, the functional configuration of the customer terminal 20 will be described. The control unit 21 of the customer terminal 20 executes programs stored in the ROM or the storage unit 27 to realize a reading control unit 211 and an access processing unit 212 as functional units as illustrated in FIG. 8.

The reading control unit 211 controls the reading unit 26 to read the attached information P1 attached to the commodity PR.

The access processing unit 212 accesses the management server 30 when the attached information P1 is read from the commodity PR under the control of the reading control unit 211. Specifically, the access processing unit 212 extracts an individual commodity code from the attached information P1 when the attached information P1 attached to the commodity PR is read by the reading unit 26. The access processing unit 212 generates access information including the extracted individual commodity code and a customer code of the terminal, and transmits the generated access information to the management server 30. Meanwhile, the access processing unit 212 may extract a commodity code from the attached information P1 to generate registration information including the commodity code together with the individual commodity code.

In addition, the access processing unit 212 has a function such as a Web client and displays a screen, which is based on information provided from the management server 30 as a response to the access information, on the display unit 25.

Next, the functional configuration of the management server 30 will be described. The control unit 31 of the management server 30 executes programs stored in the ROM or the storage unit 36 to realize the individual commodity management unit 311, a store visiting notification unit 312, and an information providing unit 313 as functional units as illustrated in FIG. 8.

The individual commodity management unit 311 is an example of a second reception unit, a registration unit, a third reception unit, and a registration cancellation unit. The individual commodity management unit 311 is a functional unit that manages the individual commodity management table T3, and executes the registration and cancellation of an individual commodity code on the individual commodity management table T3. Specifically, the individual commodity management unit 311 registers an individual commodity code and a store code which are included in registration information in the individual commodity management table T3 in association with each other when receiving the registration information from the store terminal 10. In addition, the individual commodity management unit 311 deletes a data entry related to an individual commodity code included in registration cancellation information from the individual commodity management table T3 when receiving the registration cancellation information from the store terminal 10.

The store visiting notification unit 312 is an example of a first reception unit, a specification unit, and a first transmission unit. The store visiting notification unit 312 notifies the store ST having a store code registered in the individual commodity management table T3 of a customer's store visiting. Specifically, the store visiting notification unit 312 retrieves a store code corresponding to an individual commodity code included in access information from the individual commodity management table T3 when receiving the access information from the customer terminal 20, to specify the store ST in which the customer terminal 20 which is an access source is present. The store visiting notification unit 312 notifies the store terminal 10 of the specified store ST of a customer code included in the access information. Thereby, it is possible to notify the store terminal 10 of the store ST, of a customer code for specifying a customer who is visiting the store ST. Meanwhile, in a case where a data entry corresponding to the individual commodity code included in the access information is not present in the individual commodity management table T3, the store visiting notification unit 312 suppresses the notice of the customer code to the store ST.

The information providing unit 313 is an example of a second transmission unit. The information providing unit 313 is a functional unit that provides information to the customer terminal 20 transmitting the access information. Specifically, the information providing unit 313 has a function such as a Web server, and provides commodity information regarding a commodity PR having the individual commodity code included in the access information to the customer terminal 20 which is an access source.

Here, it is assumed that information provided by the information providing unit 313 does not particularly matter. For example, the information providing unit 313 may provide information on a commodity PR having an individual commodity code included in access information, or information, such as an advertisement, on the store ST specified on the basis of the individual commodity code. In addition, the information providing unit 313 may provide a purchase screen for purchasing the same kind of commodity as the commodity PR having the individual commodity code on-line. In addition, it is assumed that information (content) to be provided to the customer terminal 20 is previously stored in the storage unit 36 or the like in association with a commodity code and a store code.

Meanwhile, it is assumed that a method of specifying a commodity PR (commodity code) from an individual commodity code does not particularly matter. For example, if a commodity code is transmitted from the customer terminal 20 together with an individual commodity code as access information, the commodity PR may be specified using the commodity code. In addition, if an individual commodity code and a commodity code are registered in the individual commodity management table T3 in association with each other, the commodity PR may be specified using the commodity code associated with the individual commodity code. In addition, the commodity PR may be specified from a code string (for example, commodity code) included in the individual commodity code.

Hereinafter, the operations of the store terminal 10, the customer terminal 20, and the management server 30 will be described.

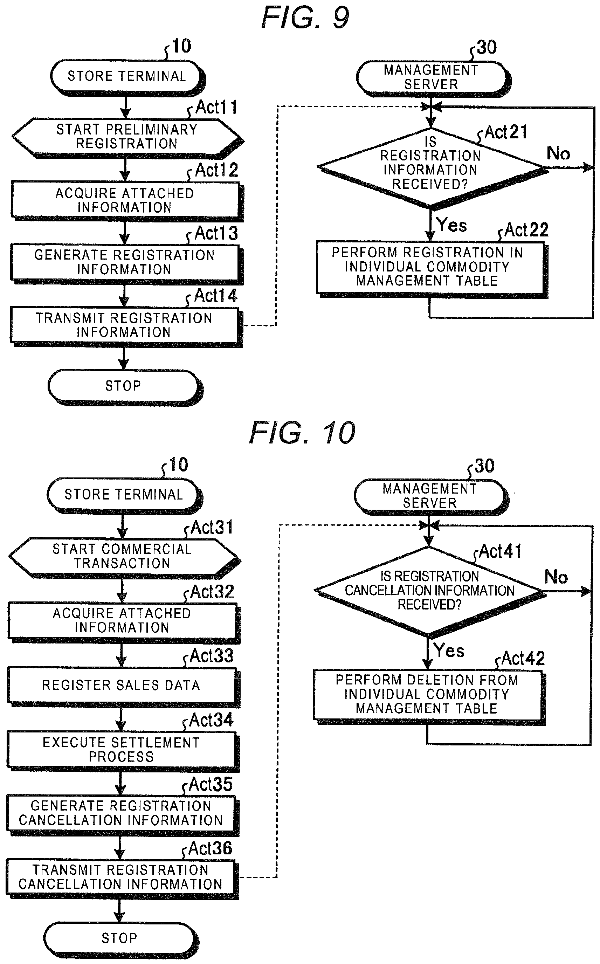

First, processing, related to the registration of an individual commodity code, which is performed between the store terminal 10 and the management server 30 will be described with reference to FIG. 9. FIG. 9 is a flow chart illustrating an example of processing performed between the store terminal 10 and the management server 30. Such processing is performed, for example, when the commodity PR is carried into the store ST or is displayed.

When an instruction for starting preliminary registration is given through the operation unit 14 or the like (Act 11), the reading control unit 111 of the store terminal 10 operates the reading unit 16 to acquire the attached information P1 from the commodity PR to be displayed (Act 12) .

Subsequently, the preliminary registration unit 112 generates registration information including the individual commodity code included in the attached information P1 acquired in Act 12 and the store code of the store ST (Act 13). The preliminary registration unit 112 transmits the registration information generated in Act 13 to the management server 30 (Act 14), and terminates the processing. Meanwhile, if there are two or more commodities PR to be registered, the preliminary registration unit 112 repeatedly executes the processes of Act 12 to 14 for each commodity PR.

On the other hand, the individual commodity management unit 311 of the management server 30 stands by until the registration information is transmitted from the store terminal 10 (Act 21; No). When the registration information is received (Act 21; Yes), the individual commodity management unit 311 registers the individual commodity code and the store code, which are included in the registration information, in the individual commodity management table T3 in association with each other (Act 22), and returns to Act 21.

By the above-described processing, the individual commodity code of the commodity PR sold in the store ST is registered in the individual commodity management table T3 of the management server 30 in association with the store code of the store ST.

Next, processing, related to the cancellation of registration of an individual commodity code, which is performed between the store terminal 10 and the management server 30 will be described with reference to FIG. 10. FIG. 10 is a flow chart illustrating an example of processing performed between the store terminal 10 and the management server 30. Such processing is performed, for example, during the settlement of the commodity PR in the store ST.

When an instruction for starting a commercial transaction is given through the operation unit 14 or the like (Act 31), the reading control unit 111 of the store terminal 10 operates the reading unit 16 to acquire the attached information P1 from the commodity PR purchased by a customer (Act 32).

Subsequently, the settlement processing unit 114 specifies a commodity PR corresponding to a commodity code included in the attached information P1 from the commodity master table T1, and registers sales data of the commodity PR in the RAM (Act 33). Meanwhile, the settlement processing unit 114 repeatedly executes the processes of Act 32 and Act 33 until an instruction for terminating the transaction is given.

Subsequently, when an instruction for terminating the transaction is given through the operation of the closing key, or the like, the settlement processing unit 114 executes a settlement process on the basis of the registered sales data (Act 34). When the settlement process is completed, the settlement processing unit 114 extracts an individual commodity code from each sales data registered, and generates registration cancellation information including the individual commodity code (Act 35). The settlement processing unit 114 transmits the generated registration cancellation information to the management server 30 (Act 36), and terminates the processing.

On the other hand, the individual commodity management unit 311 of the management server 30 stands by until the registration cancellation information is transmitted from the store terminal 10 (Act 41; No). When the registration cancellation information is received (Act 41; Yes), the individual commodity management unit 311 deletes a data entry of the individual commodity code included in the registration cancellation information, that is, a set of the individual commodity code and the store code from the individual commodity management table T3 (Act 42), and returns to Act 41.

By the above-described processing, the individual commodity code of the commodity PR purchased by the customer in the store ST is canceled (deleted) from the individual commodity management table T3 of the management server 30.

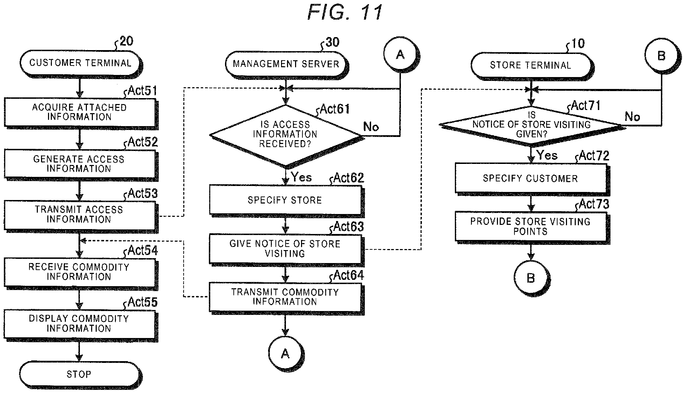

Next, processing, related to the provision of store visiting points, which is performed among the store terminal 10, the customer terminal 20, and the management server 30 will be described with reference to FIG. 11. FIG. 11 is a flow chart illustrating an example of processing performed among the store terminal 10, the customer terminal 20, and the management server 30. Such processing is performed, for example, when a customer visits the store ST.

A customer carrying the customer terminal 20 causes the customer terminal 20 to read the attached information P1 attached to any commodity PR in the store ST. The reading control unit 211 of the customer terminal 20 operates the reading unit 26 to acquire the attached information P1 attached to the commodity PR through the reading unit 26 (Act 51).

Subsequently, the access processing unit 212 of the customer terminal 20 generates access information including the individual commodity code included in the attached information read in Act 51 and the customer code of the terminal (Act 52) . Subsequently, the access processing unit 212 transmits the generated access information to the management server 30 to perform access to the management server 30 (Act 53).

On the other hand, the store visiting notification unit 312 of the management server 30 stands by until the access information is transmitted from the customer terminal 20 (Act 61; No). When the access information is received (Act 61; Yes), the store visiting notification unit 312 specifies a store ST (store code) in which the commodity PR having the individual commodity code is sold, from the individual commodity management table T3 on the basis of the individual commodity code included in the access information (Act 62) . Subsequently, the store visiting notification unit 312 transmits the customer code included in the access information to the store terminal 10 of the store ST specified in Act 62, as a notice of store visiting (Act 63) . Meanwhile, if the individual commodity code included in the access information is not registered in the individual commodity management table T3, the store visiting notification unit 312 returns the processing to Act 61.

The store visiting point providing unit 113 of the store terminal 10 stands by until the notice of store visiting is given from the management server 30 (Act 71; No). When the notice of store visiting is received (Act 71; Yes), the store visiting point providing unit 113 specifies a data entry of a customer corresponding to the customer code, which is given as a notice, from the point management table T2 (Act 72) . The store visiting point providing unit 113 provides store visiting points by adding the store visiting points to a point value of the specified customer (Act 73), and returns to Act 71.

In addition, the information providing unit 313 of the management server 30 provides information (commodity information) on the commodity PR having the individual commodity code included in the access information to the customer terminal 20 in accordance with the reception of the access information (Act 64), and returns to Act 61.

When the access processing unit 212 of the customer terminal 20 receives the commodity information from the management server 30 (Act 54), the access processing unit displays the commodity information on the display unit 25 (Act 55), and terminates the processing.

Thereby, when a customer visiting the store ST reads the attached information P1 by using the customer terminal 20 from the commodity PR sold in the store ST, the management server 30 cooperates with the customer terminal 20 to notify the store terminal 10 that the customer visits the store ST. Thereby, in the point system 1, the store terminal 10 can be notified of the customer visiting the store ST without including a device for detecting store visiting in the store ST, and thus it is possible to reduce a burden of the store ST related to the detection of store visiting.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions . The accompanying claims and their equivalents are intended to cover such forms or modifications as would fall within the scope of the inventions.

For example, in the above-described embodiment, a configuration is adopted in which the management server 30 gives a notice of store visiting in accordance with the reception of access information, but a configuration may be adopted in which a notice of store visiting is given if a predetermined condition is satisfied. For example, the store visiting notification unit 312 may perform control such that the number of times of transmission of the same customer code to the same store ST (store code) is set to be one within a predetermined period of time. Specifically, the store visiting notification unit 312 associates a customer code transmitted as a notice of store visiting and a store code of a transmission destination with date and time information indicating the date and time of transmission, and stores the association in the storage unit 36 or the like as a notice history. The store visiting notification unit 312 suppresses the transmission of a notice of store visiting corresponding to conditions of the customer code and the store code included in the notice history until a predetermined time is reached or a predetermined period of time elapsed. Thereby, the management server 30 can limit the number of times of notification of the same store ST with respect to the same customer code to one within business hours of the store ST or one in 24 hours, and thus it is possible to prevent store visiting points from being multiply provided by one store visiting. Meanwhile, after the predetermined time or the predetermined period of time elapses, the notice history is reset.

In the above-described embodiment, an elapsed time from the transmission of access information after the attached information P1 is read by the customer terminal 20 does not particularly matter, the provision of store visiting points may be restricted on the basis of the elapsed time.

If this configuration is adopted, the access processing unit 212 of the customer terminal 20 generates access information inclusive of date and time information indicating a date and time when the reading control unit 211 reads the attached information, and transmits the generated access information to the management server 30. On the other hand, when the store visiting notification unit 312 of the management server 30 receives the access information from the customer terminal 20, the store visiting notification unit determines whether or not an elapsed time from a date and time indicated by the date and time information included in the access information to the present date and time is within a predetermined range (for example, within 5 minutes) . The store visiting notification unit 312 transmits a notice of store visiting to the store ST on a condition that the elapsed time is within the predetermined range. Thereby, the immediacy of the notice of store visiting can be increased, and thus it is possible to provide store visiting points while a customer stays in the store ST. In addition, if the customer terminal 20 accesses the management server 30 a plurality of times at a different time by using attached information which is read once, it is possible to prevent the store visiting points from being multiply provided. Meanwhile, if the elapsed time exceeds the predetermined range, the specification of the store ST and the notice of store visiting are not performed, but the provision of information to the customer terminal 20 which is an access source may be performed.

In the above-described embodiment, a configuration in which the store terminal 10 holds the commodity master table T1 and the point management table T2 is adopted, but is not limited thereto. For example, a configuration may be adopted in which an external device (store server or the like) which is accessible by the store terminal 10 holds either one or both of the commodity master table T1 and the point management table T2.

In the above-described embodiment, a configuration in which the management server 30 holds the individual commodity management table T3 is adopted, but is not limited thereto. For example, a configuration may be adopted in which an external device accessible by the management server 30 holds the individual commodity management table T3.

In addition, the program executed by each device of the above-described embodiment is preinstalled in a recording medium (ROM or a memory device) included in the device and provided, but is not limited thereto. For example, the program in an installable format file or an executable format file may be recorded on a computer readable recording medium such as a CD-ROM, a flexible disk (FD), a CD-R, and a Digital Versatile Disk (DVD) and provided. Further, a recording medium is not limited to a medium independent of a computer or an embedded system, and also includes a recording medium which records or temporarily records a program transmitted via a LAN or the Internet and downloaded.

In addition, the program executed by each device of the embodiment is stored in a computer connected to a network such as the Internet, and may be provided by being downloaded via the network, and may be provided or distributed via the network such as the Internet.

## Claims

1. A server device comprising:
a first reception unit configured to receive a customer identifier for identifying a customer and an individual commodity identifier for identifying a commodity which is read by a customer terminal, from the customer terminal owned by the customer;
a specification unit configured to specify a store identifier of a store that sells the commodity having the individual commodity identifier received by the first reception unit, on the basis of individual commodity management information in which an individual commodity identifier of each commodity and the store identifier of the store that sells the commodity are associated with each other; and
a first transmission unit configured to transmitting the customer identifier received by the first reception unit to the store corresponding to the store identifier specified by the specification unit, as a notice of store visiting.

2. The device according to claim 1, further comprising:
a second reception unit configured to receive an individual commodity identifier of a commodity to be registered and a store identifier of a store that sells the commodity from the store; and
a registration unit configured to register the individual commodity identifier and the store identifier, which are received by the second reception unit, in the individual commodity management information in association with each other.

3. The device according to claim 1 or 2, further comprising:
a third reception unit configured to receive an individual commodity identifier of a commodity which is a target for cancellation of registration; and
a registration cancellation unit configured to delete a set of the individual commodity identifier received by the third reception unit and a store identifier associated with the individual commodity identifier from the individual commodity management information.

4. The device according to any of claims 1 to 3, further comprising:
a second transmission unit configured to transmit information on the commodity having the individual commodity identifier received by the first reception unit to the customer terminal.

5. The device according to any of claims 1 to 4, wherein the first transmission unit performs control such that the number of times of transmission of the same customer identifier with respect to the same store is set to one within a predetermined period of time.

6. A service method comprising:
receiving a customer identifier for identifying a customer and an individual commodity identifier for identifying a commodity which is read by a customer terminal, from the customer terminal owned by the customer;
specifying a store identifier of a store that sells the commodity having the received individual commodity identifier, on the basis of individual commodity management information in which an individual commodity identifier of each commodity and the store identifier of the store that sells the commodity are associated with each other; and
transmitting the received customer identifier to the store corresponding to the specified store identifier, as a notice of store visiting.
